# EUROPEAN PATENT SPECIFICATION

(11) **EP 2 428 432 B1**
(45) Date of publication and mention of the grant of the patent: **14.05.2014**
(21) Application number: 11180688.1
(22) Date of filing: 09.09.2011
(51) Int. Cl.: B62D 21/15, B62D 25/08

(54) **Front side vehicle body structure**
Vorderseitenchassis einer Fahrzeugkarosserie
Châssis antérieur d'un véhicule

(30) Priority: 14.09.2010 JP 2010206082; 14.09.2010 JP 2010206110
(43) Date of publication of application: 14.03.2012
(73) Proprietor: Honda Motor Co., Ltd., Tokyo 107-8556 (JP)
(72) Inventor: Takeda, Tomoya, Saitama, 351-0193 (JP); Kominamidate, Masami, Saitama, 351-0193 (JP)
(74) Representative: Prechtel, Jörg

(56) References cited:
- EP-A1- 2 105 372
- EP-B1- 1 786 660
- WO-A1-2011/101906
- DE-B3-102004 058 363
- FR-A1- 2 935 338
- JP-A- 2009 255 883
- JP-U- 62 059 579

## Description

The present invention relates to front vehicle body structures which include, on each of left and right half sections of the vehicle body, a front pillar disposed behind a front side frame, an upper frame extending forward from the front pillar above the front side frame, and a damper section (damper housing) connected to the front side frame and upper frame, and in which the left and right front side frames are connected at their respective rear ends to a dashboard separating an engine room and a cabin or passenger compartment, and each of the left and right damper sections has a lower end portion placed on and connected to the corresponding front side frame.

Generally, the front vehicle body structures include a dashboard cross member connecting to a lower edge portion of a lower dashboard panel constituting a front wall of a passenger compartment, left and right front side frames extending forward from the dashboard cross member to be located to the left and right of an engine room, and damper housings (damper sections) mounted to the left and right front side frames.

Each of the damper housings (damper sections) includes a partition wall (bulkhead) that connects to a front wall portion facing toward the front of the vehicle and partitions the interior of the corresponding front side frame. Each of the left and right front side frames includes a front deforming section provided more forwardly of the vehicle than the bulkhead, an inner fragile section provided on an inner side wall portion and located more rearwardly of the vehicle than the bulkhead, and an outer fragile section of a concave shape formed on an outer wall portion and located more rearwardly of the vehicle than the damper housing.

One example of such front vehicle body structures is disclosed in Japanese Patent Application Laid-open Publication No. 2009-255883 (hereinafter referred to as "the patent literature"), which can absorb most of frontal collision energy through deformation of the front side frames and can thereby stabilize a deformation mode of the front side frames at the time of a frontal collision of the vehicle, and discloses a front vehicle body structure comprising a front side frame extending in a front-rear direction of a vehicle body, and a damper section, which includes a damper base having a damper unit mounted thereon, and a damper housing provided around the damper base, having a lower end portion placed on and connected to the front side frame,
wherein the front side frame includes an easily-deformable portion formed within a range of the front side frame over which the damper section is placed on and connected to, the easily-deformable portion having a lower yield strength against rearward and forward input loads than remaining regions of the front side frame.

In recent years, there has been an increased trend for a short overhang design having a reduced length, in a front-rear direction, of the engine room, in order to achieve an increased area of the cabin or passenger compartment. Reducing the front-rear length of the engine room would undesirably reduce a frontal-collision-load absorbing area, and thus, there has been a demand for a more efficient frontal-collision-load absorbing performance.

Further, with the front vehicle body structure disclosed in the patent literature, which is constructed to absorb most of frontal collision energy through deformation of the front side frames, the frontal-collision-load absorbing performance greatly depends on rigidity of the front side frames, and thus, it is not possible to achieve more efficient frontal collision load absorption utilizing other component parts of the front vehicle body structure.

Furthermore, in the front vehicle body structure disclosed in the patent literature, a mounting section of each of the damper housings, at which the damper housing is mounted to the corresponding front side frame, is in the form of bifurcated legs having an opening, and thus, the damper housing would undesirably have a low damper supporting rigidity. If the mounting section of each of the damper housings is formed to have no opening, then it could have an increased damper supporting rigidity, but stabilization of the deformation mode would become difficult. Thus, the frontal-collision-load absorbing performance of the disclosed front vehicle body structure can be enhanced only if a region in front of the front end of each of the damper housings is constructed to function as the impact absorbing area.

Further, the provision of the fragile sections on the front side frames would reduce the strength of the front side frames and thereby lower the collision load or impact absorbing performance.

EP 1 786 660 B1, FR 2 935 338 A1, JP 62-59579 U, and EP 2 105 372 A1 disclose further front vehicle body structures.

In view of the foregoing prior art problems, it is an object of the present invention to provide an improved front vehicle body structure which can not only achieve an increased impact absorbing area but also achieve an increased impact absorbing amount.

It is another object of the present invention to provide an improved front vehicle body structure which can achieve stabilized deformation mode control.

It is still another object of the present invention to provide an improved front vehicle body structure which can not only achieve an increased rigidity with which the damper is supported by the damper housing (damper section) but also achieve an increased impact absorbing amount.

It is still another object of the present invention to provide an improved front vehicle body structure which can achieve stabilized bending mode control of each of the front side frames.

In order to accomplish the above-mentioned objects, the present invention provides a structure according to claim 1.

Because the vertical bead is formed in generally the same position, in the front-rear direction of the vehicle body, as the easily-deformable portion, the vertical bead can function as a vertical beam against upward and downward input loads to the damper unit, and thus, the present invention can increase rigidity with which the damper is supported by the damper section (i.e., damper supporting rigidity).

Further, the easily-deformable portion and vertical bead can function as bending start points in response to rearward and forward input frontal collision loads, and thus, the damper base formed of a thick plate can be used for impact absorption, so that the present invention can achieve an increased impact absorbing amount. Furthermore, with the vertical bead formed in generally the same position, in the front-rear direction of the vehicle body, as the easily-deformable portion, it can be regarded that the bending start points provided by the front side frame and damper section are located in generally the same position in the front-rear direction. As a result, the present invention can achieve stabilized bending mode control of the front side frame.

Preferably, the front side frame has a horizontal bead extending along a longitudinal direction of the front side frame, and the easily-deformable portion is provided forwardly of a front end portion of the horizontal bead or rearwardly of a rear end portion of the horizontal bead. With such a horizontal bead, the present invention can increase a yield strength of the front side frame against rearward and forward input loads, and allows the easily-deformable portion to be constructed in a simplified manner. Further, the present invention can achieve stabilized bending mode control of the front side frame without providing any other particular weakened portion in the front side frame and hence without degrading the impact absorbing performance of the front side frame.

Preferably, the vertical bead has front and rear ridge lines, and a width between the front and rear ridge lines gradually increases toward the lower end portion of the damper section connected to the front side frame. With this arrangement, an upwardly-thrusting input load from a damper supported by the damper section, for example, can be borne over a wide range in the front-rear direction of the front side frame. As a result, the present invention can achieve an even further increased damper supporting rigidity.

Preferably, the front vehicle body structure of the present invention further comprises a dashboard connected at the front end thereof to the front side frame and separating an engine room and a cabin (or passenger compartment). Further, the front ridge line of the vertical bead extends vertically toward the easily-deformable portion while the rear ridge line extends vertically toward a connection section between the front side frame and the dashboard. The front ridge line can function as a bending start point so that the deformation mode control of the front side frame can be stabilized, while the rear ridge line can increase the damper supporting rigidity.

Preferably, the connection section between the front side frame and the dashboard includes a reinforcing bracket for reinforcing the connection section. The reinforcing bracket can increase rigidity and strength of the connection section to which the rear ridge line of the vertical bead connects. In this way, the present invention can achieve an even further increased damper supporting rigidity.

Preferably, the front vehicle body structure of the present invention further comprises a front pillar disposed behind the front side frame, and an upper frame disposed outwardly, in the vehicle width direction, of the front side frame and extending forwardly from the front pillar above the front side frame. Further, a bent portion bent in the vehicle width direction is provided in a connection section between the damper section and the upper frame. Because the bent portion bent in the vehicle width direction is provided in the connection section, a region located forwardly of the bent portion can function as an expanded impact absorbing area, and the damper section formed of a thick plate can be used as an impact absorbing member. Thus, the present invention can achieve an even further increased impact absorbing area.

Preferably, in the front vehicle body structure of the present invention, the upper frame includes a reinforcing plate for reinforcing a connection region of the upper frame to which the damper section is connected. By changing as necessary the strength of the reinforcing plate, the present invention can perform appropriate deformation mode control such that the upper frame deforms prior to bending deformation of the damper section. As a result, the present invention can minimize a left-uncollapsed region of the upper frame and thereby achieve an even further enhanced impact absorbing efficiency.

Preferably, the reinforcing plate includes a reinforcing-plate-side bent portion provided at a position thereof corresponding to the bent portion provided in the connection section between the damper section and the upper frame. This arrangement permits more reliable bending deformation of the damper section while controlling the deformation mode in such a manner that the upper frame can deform prior to the bending deformation of the damper section. As a result, the present invention can achieve both an enhanced impact absorbing efficiency and stabilized deformation mode control.

Preferably, the upper frame includes an arch-shaped section curved downwardly toward a rear end of the upper frame and extending along a shape of a wheel arch, and the reinforcing plate is disposed in front of the arch-shaped section and has a reinforcing-plate-side bead extending along a longitudinal direction of the upper frame. The reinforcing-plate-side bead extends obliquely, in spaced-apart relation to the arch-shaped section, with its rear end located higher than its front end. With such a reinforcing-plate-side bead extending obliquely in spaced-apart relation to the arch-shaped section, the present invention can avoid an unwanted situation where a frontal collision load concentrates on and undesirably bends the arch-shaped section provided at a rear end portion of the upper frame and undesirably deforms the cabin without being appropriately transmitted to the front pillar (i.e., without the deformation mode control being stabilized). Namely, the present invention allows the frontal collision load to be transmitted upwardly away from the arch-shaped section, thereby preventing unwanted bending of the rear end portion of the upper frame.

Preferably, the front vehicle body structure of the present invention further comprises a cowl box of a generally C cross-sectional shape disposed between the front pillar and the upper frame and extending in the vehicle width direction. The cowl box has a side surface facing outwardly in the vehicle width direction, and a stiffener is provided on the side surface for preventing collapsing of a closed section of the cowl box. Such an arrangement can prevent sectional collapsing of the cowl box occurs, and thus avoid a situation where a frontal collision load undesirably deforms the cabin without being appropriately transmitted from the upper frame to the front pillar (i.e., without the deformation mode control being stabilized). Further, by the provision of the stiffener preventing sectional collapsing of the cowl box following the deformation of the damper section, the present invention can reliably prevent deformation of the cabin by allowing the collision load to be reliably transmitted to the front pillar while maintaining the sectional shape of the cowl box.

Preferably, the stiffener has a stiffener-side bead extending, in the front-rear direction of the vehicle body, closely to and generally in series with the reinforcing-plate-side bead. With such an arrangement, the present invention can increase an amount of load transmission from the reinforcing plate to the stiffener and minimize an amount of load transmission to the arch-shaped section.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will be described in detail below, by way of example only, with reference to the accompanying drawings, in which:
Fig. 1 is a plan view showing a right half section of a front vehicle body structure according to an embodiment of the present invention;
Fig. 2 is an inner side view of the embodiment of the front vehicle body structure shown in Fig. 1;
Fig. 3 is a sectional view taken along line 3 - 3 of Fig. 2;
Fig. 4 is a sectional view taken along line 4 - 4 of Fig. 2;
Fig. 5 is an upper perspective view of the embodiment of the front vehicle body structure, which shows an inside of the front vehicle body structure;
Fig. 6 is an outer side view of the embodiment of the front vehicle body structure shown in Fig. 1;
Fig. 7 is a view explanatory of deformation segments of the front vehicle body structure shown in Fig. 6;
Fig. 8 is an outer side view showing in enlarged scale principal sections of the front vehicle body structure shown in Fig. 6;
Fig. 9 is a side view explanatory of the front vehicle body structure shown in Fig. 1;
Fig. 10 is a perspective view showing a cowl box of the front vehicle body structure shown in Fig. 1;
Fig. 11 is a sectional view taken along line 11 - 11 of Fig. 10; and

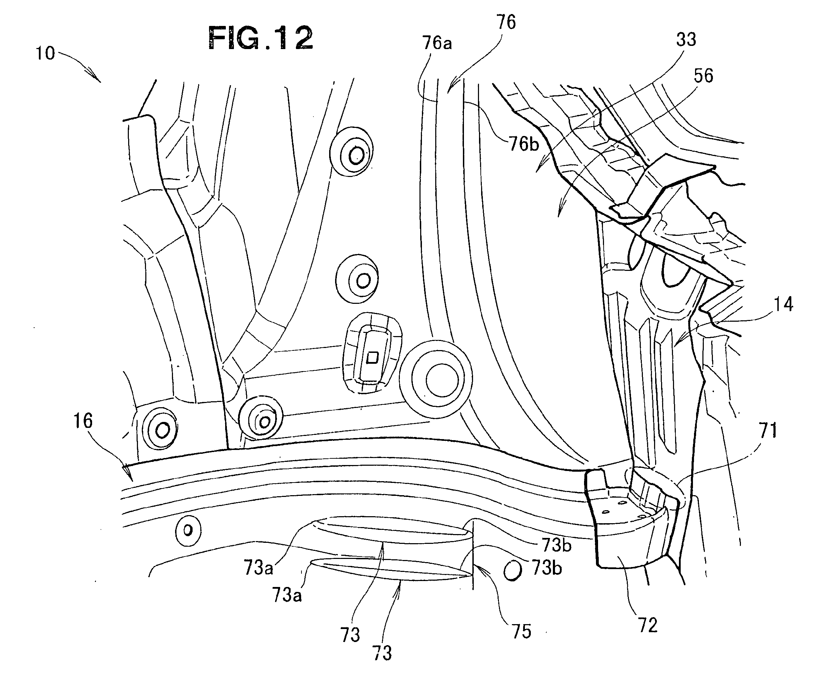

Fig. 12 is a perspective view showing in enlarged scale principal sections of the front vehicle body structure shown in Fig. 5.

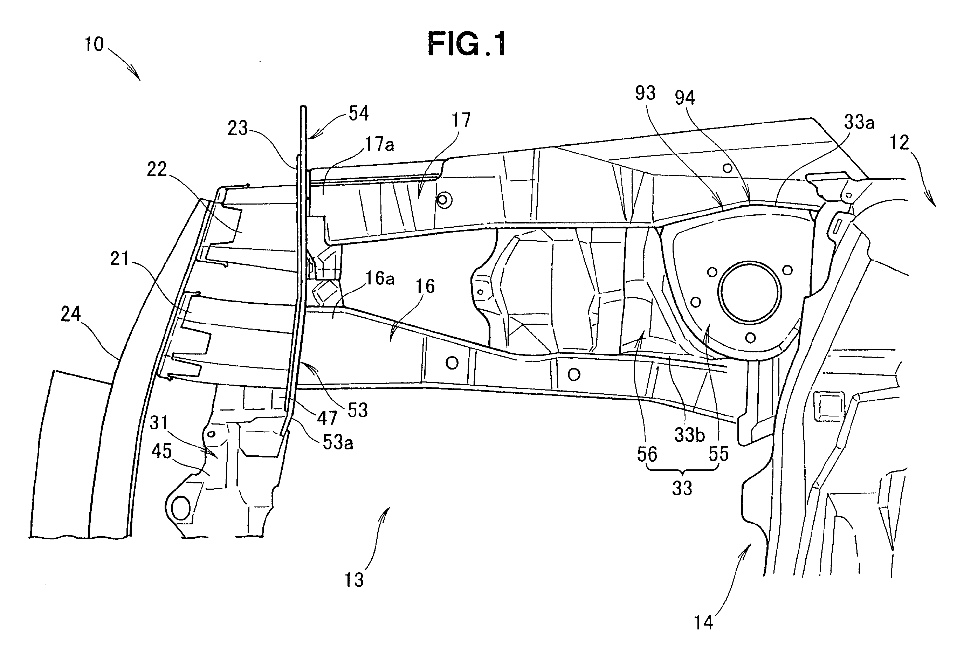

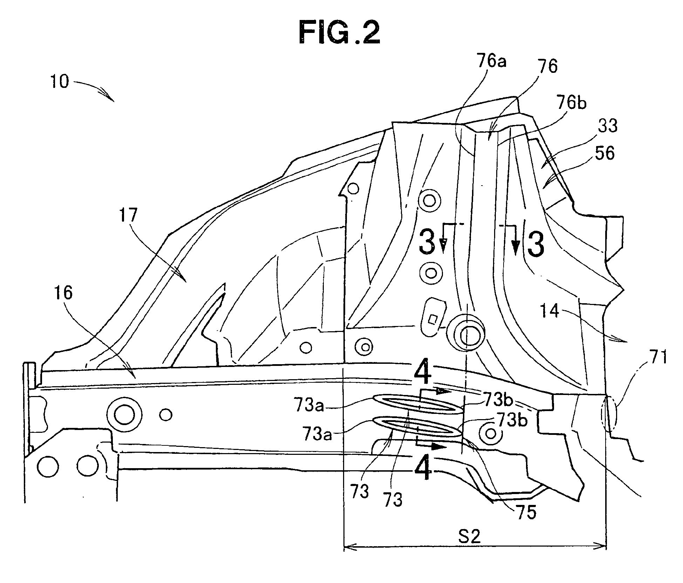

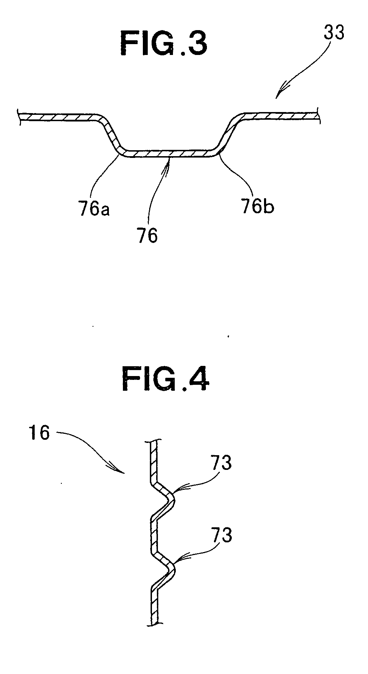

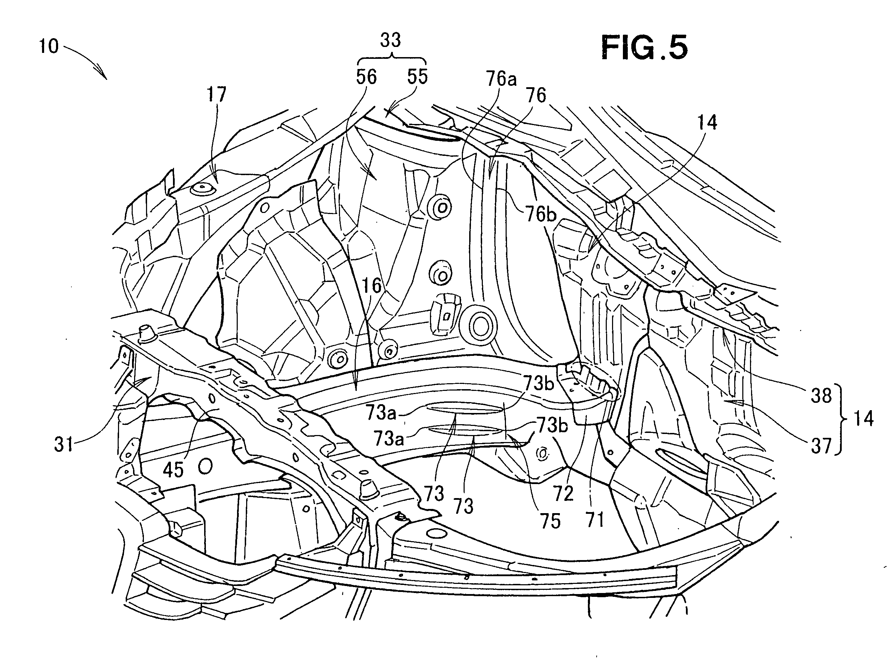

Reference is now made to Fig. 1 showing in plan a right half section of an embodiment of a front vehicle body structure of the present invention, and to Fig. 2 showing an inner side of the front vehicle body structure of Fig. 1. In a front right section of a vehicle body 10, as shown in Figs. 1 to 6, there are provided: a front bulkhead 31 having a rectangular shape as viewed from its front; a front side frame 16 disposed outwardly, in a vehicle width direction, of the front bulkhead 31 and extending in a front-rear direction of the vehicle body and hence the vehicle; an upper frame (or upper member) 17 disposed outwardly, in the vehicle width direction, of the front side frame 16 in side by side relation to the latter and curved upwardly toward the rear of the vehicle body; a front pillar 19 disposed behind or rearwardly of the front side frame 16; a dashboard 14 separating an engine room 13 and a passenger compartment (cabin) 12; a damper section 33 connected at its lower end 33b to the front side frame 16, connected at its upper end 33a to the upper frame 17 and supporting a damper unit (not shown); an inner impact absorbing member (inner bumper beam extension) 21 provided at the front end of the front side frame 16; an outer impact absorbing member (outer bumper beam extension) 22 provided at the front end of the upper frame 17 and disposed outwardly, in the vehicle width direction, of the inner impact absorbing member 21; a connection plate 23 interconnecting the inner impact absorbing member 21 and the outer impact absorbing member 22 in the vehicle width direction; a bumper beam 24 provided at the respective front ends of the inner and outer impact absorbing members 21 and 22; and a cowl box 34 disposed over a lower dashboard panel 37 of the dashboard 14 and accommodating therein a driving section of a wiper unit (not shown).

Similar elements to the aforementioned are provided in a front left section of the vehicle body 10. The front vehicle body structure of the present invention comprises: the left and right front side frames 16 connected at their respective rear ends to the dashboard 14 and extending forwardly from the dashboard 14; the left and right front pillars 19; the left and right upper frames 17 extending forward from the corresponding front pillars 19 and generally located above the corresponding front side frames 16; the left and right damper sections (damper housings) 33 having lower end portions placed on and connected to the left and right front side frames 16.

Because the left and right such front side frames 16, left and right upper frames 17, left and right front pillars 19, left and right inner and outer impact absorbing members 21 and 22, left and connection plates 23, and left and right damper sections 33 are provided in left-right symmetric relation to each other, the following mainly describe the elements provided in the right half section of the front vehicle body structure.

The damper section 33 includes a damper base 55 having the not-shown damper (damper unit) mounted thereon, and a damper housing 56 provided around the damper base 55. The upper end 33a of the damper section 33 is a portion corresponding to an upper end portion of the damper section 33 (i.e., portion connected to the upper frame 17), while the lower end 33b of the damper section 33 is a portion corresponding to a lower end portion of the damper housing 56 (i.e., portion connected to the front side frame 16).

The front side frame 16, which has a closed cross-sectional shape, is connected at its front end portion 16a with a front end portion 17a of the upper frame 17 in generally the same vertical plane as the front end portion 17a. Namely, a front-side-frame flange 53 is provided on the front end portion 16a of the front side frame 16 while an upper-frame flange 54 is provided on the front end portion 17a of the upper frame 17, and these flanges 53 and 54 extend generally continuously with each other and in generally the same vertical plane.

The front-side-frame flange 53 of the front side frame 16 extends inwardly in the vehicle width direction and has an overlapping portion 53a that is located behind and overlaps a closed section of one of left and right side stays (right side stay in the illustrated example) 47 of the front bulkhead 31.

The front side frame 16 can be said to be a member fixedly connected at its rear end to the dashboard 14 via a connection section 71 and extending forwardly from the dashboard 14. The connection section 71 includes a reinforcing bracket 72 that reinforces the connection section 71.

The front side frame 16 includes horizontal beads 73 provided halfway along the length of the front side frame 16 and extending generally in the length or longitudinal direction of the front side frame 16, and an easily-deformable portion 75 formed within a range of the front side frame 16 which the damper housing 56 of the damper section 33 is placed on and connected to and having a lower yield strength against rearward and forward input loads than the remaining regions of the front side frame 16. The provision of such horizontal beads 73 can increase a yield strength of the front side frame 16 against rearward and forward input loads.

It should be appreciated that, whereas the easily-deformable portion 75 is provided rearwardly of the rear end portions 73b of the horizontal beads 73 as shown in Fig. 2, the easily-deformable portion 75 may alternatively be provided forwardly of the front end portions 73a of the horizontal beads 73. What is essential here is that the easily-deformable portion 75 disposed rearwardly of the rear end portions 73b or forwardly of the front end portions 73a of the horizontal beads 73 has a lower yield strength against rearward and forward input loads than the remaining regions of the front side frame 16.

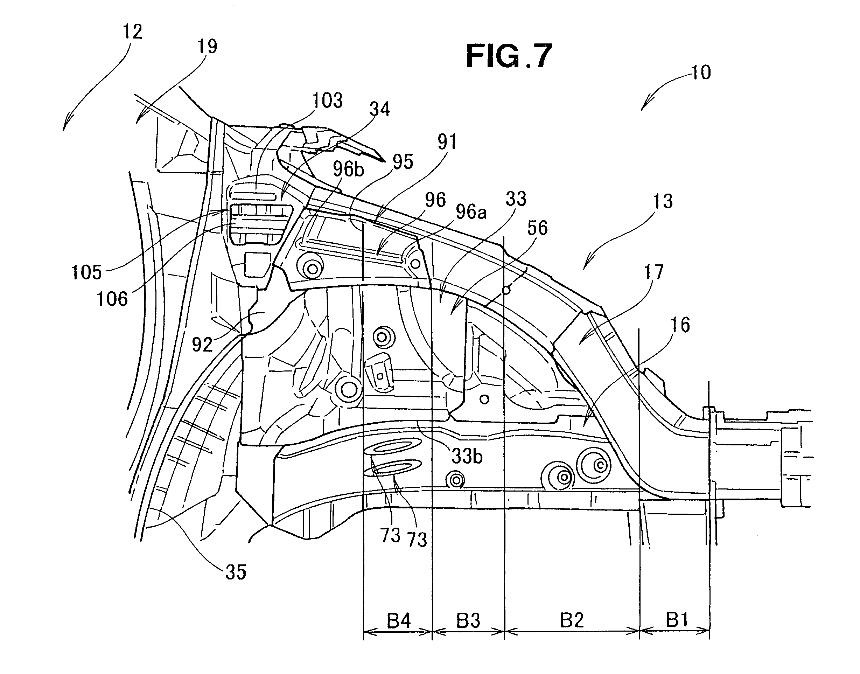

As shown in Figs. 2 and 7, the above-mentioned horizontal beads 73 are formed on the inner and outer surfaces of the front side frame 16 in the same region in the front-rear direction.

As seen in Fig. 2, the easily-deformable portion 75 is provided rearwardly of rear end portions 73b of the horizontal beads 73, and the easily-deformable portion 75 is preferably in the form of a bending line formed therein so that it can easily deform in response to a frontal collision load. Alternatively, the easily-deformable portion 75 may be in the form of a small-thickness portion smaller in thickness than the remaining regions, a notch or recess such that it can easily deform in response to a frontal collision load. In this way, the easily-deformable portion 75 can be constructed in a simplified manner. The easily-deformable portion 75 functions as a bending start point at which the damper section 33 and front side frame 16 start bending in response to a frontal collision load. Alternatively, the easily-deformable portion 75 may be provided forwardly of front end portions 73a of the horizontal beads 73. Further, S2 in Fig. 2 indicates a damper housing contact range over which the damper housing 56 of the damper section 33 is placed on and connected to the front side frame 16.

Further, the easily-deformable portion 75 is located in generally the same position, in the front-rear direction, as a later-described vertical bead 76 that is provided on the damper housing 56 of the damper section 33; namely, the easily-deformable portion 75 generally aligns vertically with the vertical bead 76.

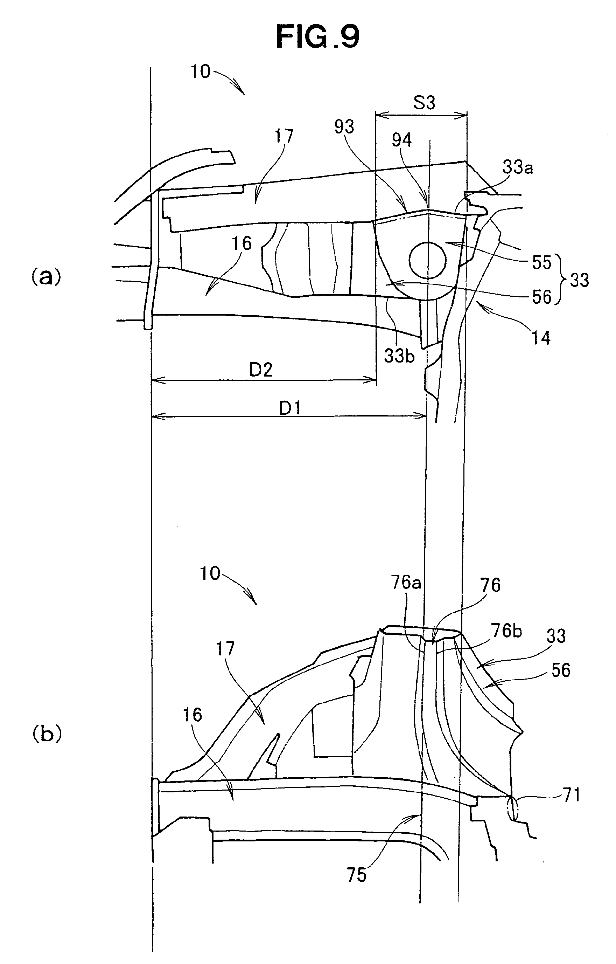

As shown in Figs. 7 and 9, the upper frame 17 includes a reinforcing plate 91 for reinforcing a connection region S3 of the frame 17 to which the damper section 33 is connected, and an arch-shaped section 92 provided in an underside region at a rear end portion thereof and curved arcuately downwardly toward the lower end of the vehicle body along the shape of a wheel arch 35.

Further, as shown in Figs. 1 and 9, the damper base 55 of the damper section 33 includes a bent portion 94 that is provided in a portion (side connection section) 93 thereof connected to the upper frame 17 and that is bent outwardly in the vehicle width direction.

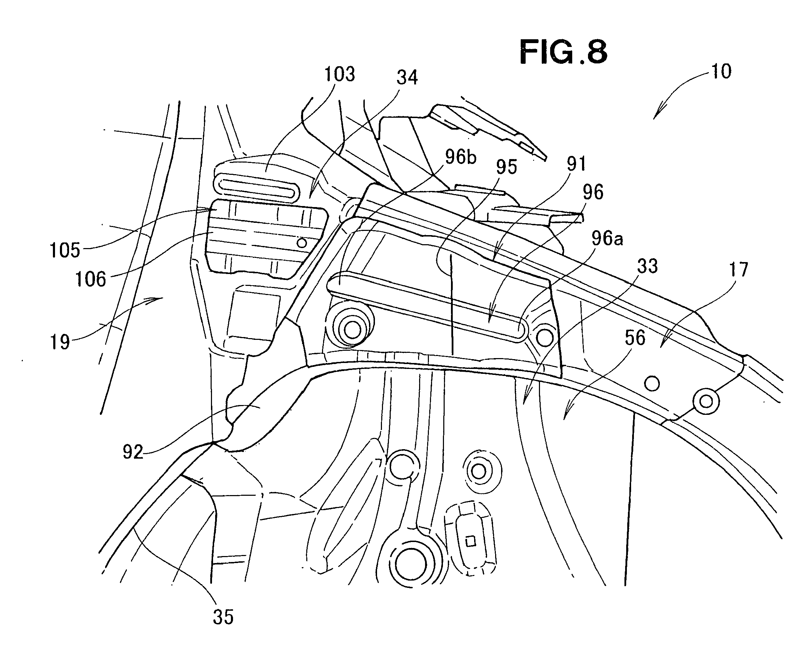

Further, as shown in Figs. 1 and 8, the reinforcing plate 91 includes a reinforcing-plate-side bent portion 95 located at a position thereof corresponding to the bent portion 94 of the damper base 55, and a reinforcing-plate-side bead 96 located in front of the arch-shaped section 92 and extending along a longitudinal direction of the upper frame 17. The reinforcing-plate-side bead 96 is disposed spaced upwardly from the arch-shaped section 92 with the rear end 96b of the bead 96 located higher than the front end 96a of the bead 96.

Further, as shown in Fig. 1, the inner impact absorbing member 21 is provided at the front end portion 16a of the front side frame 16 and extends forwardly beyond the front bulkhead 31. The inner impact absorbing member 21 curves in such a manner that its front end is oriented obliquely outwardly in the vehicle width direction. Thus, when a frontal collision load acts obliquely on the bumper beam 24 from an external object located laterally outwardly of the vehicle, the inner impact absorbing member 21 can smoothly collapse to promote absorption of the collision load or impact.

The outer impact absorbing member 22 is provided at the front end portion 17a of the upper frame 17 and extends straight toward the front of the vehicle. Thus, when a frontal collision load acts on the bumper beam 24, the outer impact absorbing member 22 can smoothly collapse to promote absorption of the collision impact or load.

Further, the connection plate 23 extends in the vehicle width direction to integrally connect the inner and outer impact absorbing members 21 and 22. The front bulkhead 31 includes an upper stay 45 and lower stay (not shown) extending in the vehicle width direction, and a pair of left and right side stays 47 as shown in Fig. 1.

Further, as shown in (a) and (b) of Fig. 9, the damper base 55 of the damper section 33 is formed of a thick plate, and the damper section 33 includes the vertical bead 76 that is formed on a substantially middle region, in the vehicle width direction, of the bent portion 94, has a cross-sectional shape convexly projecting inwardly in the vehicle width direction and extends vertically, i.e. in an up-down direction of the vehicle body.

The vertical bead 76 is located in generally the same position, in the front-rear direction of the vehicle body, as the easily-deformable portion 75 of the front side frame 16, and the vertical bead 76 has front and rear ridge lines 76a and 76b. More specifically, the front ridge line 76a of the vertical bead 76 extends to generally align vertically with the easily-deformable portion 75.

More specifically, the front ridge line 76a of the vertical bead 76 extends vertically toward the easily-deformable portion 75, while the rear ridge line 76b extends vertically toward the connection section 71 between the front side frame 16 and the dashboard 14. A width of the vertical bead 76 between the front ridge line 76a and the rear ridge line 76b gradually increases toward the lower end portion of the damper section 33 connected to the front side frame 16, so that damper supporting rigidity can be increased. Because the width of the vertical bead 76 gradually increases toward the lower end portion of the damper section 33 like this, an upwardly-thrusting input load from the damper supported by the damper section 33 can be borne over a wide range in the front-rear direction of the front side frame 16. As a result, the instant embodiment can achieve an even further increased damper supporting rigidity.

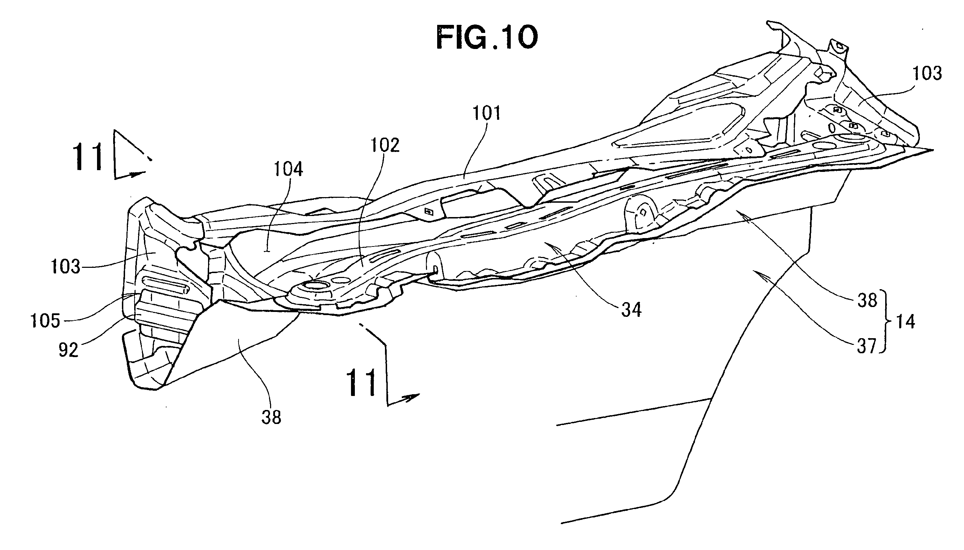

As shown in Figs. 1, 5 and 10, the dashboard 14 includes the lower dashboard panel 37 separating the passenger compartment (cabin) 12 and the engine room 13, and an upper dashboard panel 38 provided over the lower dashboard panel 37.

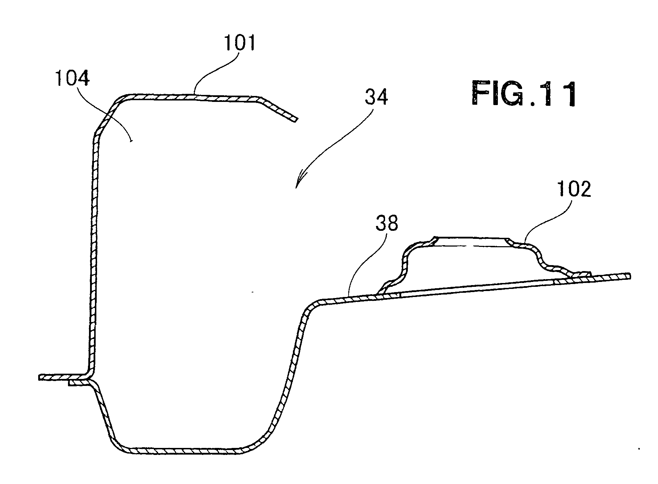

Further, as shown in Figs. 8, 10 and 11, the cowl box 34 is disposed between a front side of the front pillar 19 and a rear side of the upper frame 17, and it has a space section 104 of a generally C cross-sectional shape opening toward the front of the vehicle and extending in the vehicle width direction.

More specifically, the cowl box 34 comprises: the upper dashboard panel 38 provided over the lower dashboard panel 37; a windshield 101; a dashboard cross member 102 provided over the upper dashboard panel 38 to reinforce the upper dashboard panel 38; and left and right side panels 103 provided on the left and right ends of the lower dashboard panel 37, windshield 101 and dashboard cross member 102.

Further, in the cowl box 34 provided over the lower dashboard panel 37, the space section 104 has accommodated therein a linkage, pivot, motor etc. that constitute a wiper unit.

Stiffeners 105 are disposed on the side panels (cowl side panels) 103 to prevent collapsing of a closed section of the cowl box 34. Each of the stiffeners 105 has a stiffener-side bead 106 (Fig. 8) disposed to extend closely to and generally in series with the above-mentioned reinforcing-plate-side bead 96.

Fig, 7 shows deformation segments B1 to B4 set within the engine room 13 that deform in response to a frontal collision. In the deformation segment B1, compressive deformation is promoted because the front side frame 16 and upper frame 17 are each elongated and extend in the front-rear direction of the vehicle body. In the deformation segment B2, bending deformation is promoted because the upper frame 17 is formed in a shape bending obliquely upwardly toward the rear of the vehicle body. Further, in the deformation segment B3, compressive deformation is promoted because the front side frame 16 and upper frame 17 extend generally in the front-rear direction of the vehicle body. Furthermore, in the deformation segment B4, bending deformation is promoted because the easily-deformable portion 75 is formed on the front side frame 16, the bent portion 94 is formed on the damper section 33 and the bent portion 95 is formed on the reinforcing plate 91.

As shown in Fig. 8 and (a) and (b) of Fig. 9, the damper section 33 has the bent portion 94 provided on a substantially middle region, in the front-rear direction, of the damper base 55, and this bent portion 94 functions as a bending point of the damper section 33. Thus, a region located forwardly of the bent portion (bending point) 94 can function as an expanded impact absorbing area D1. If no such bent portion 94 is provided, then a region located forwardly of the damper section 33 functions as an impact absorbing area D2 that is smaller than the impact absorbing area D1 (i.e., D1 > D2). Namely, the provision of the bent portion 94 can increase the impact absorbing area D2 into the expanded impact absorbing area D1. Further, because the damper base 55 formed of a thick plate can be used as an impact absorbing member, an increased impact absorbing amount can be achieved.

Further, the reinforcing plate 91 is fixed to the connection region of the upper frame 17 to which the damper section 33 is connected. Thus, deformation mode control can be performed such that the upper frame 17 deforms prior to the bending deformation of the damper section 33. In this way, the instant embodiment can minimize a left-uncollapsed region of the upper frame 17 and thereby achieve an enhanced impact absorbing efficiency.

The reinforcing-plate-side bent portion 95 of the reinforcing plate 91 has a bent shape corresponding to that of the bent portion 94 of the damper section 33. This arrangement permits more reliable bending deformation of the damper section 33 while controlling the deformation mode in such a manner that the upper frame 17 can deform prior to the bending deformation of the damper section 33. In this way, the instant embodiment can achieve both an enhanced impact absorbing efficiency and stabilized deformation mode control.

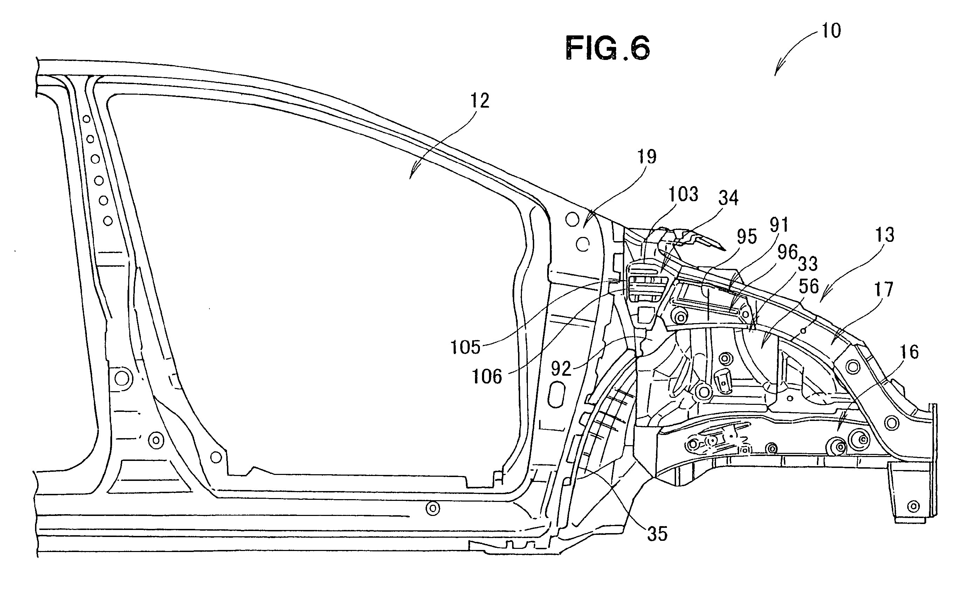

The above-mentioned reinforcing-plate-side bead 96 extends along the length of the upper frame 17 with the rear end 96b located higher than the front end 96a. If such an arrangement is not employed, a frontal collision load would concentrate on and undesirably bend the arch-shaped section 92 provided at the rear end portion of the upper frame 17, and thus, the frontal collision load may undesirably deform the cabin or passenger compartment 12 (Fig. 6) without being appropriately transmitted to the front pillar 19 (i.e., without the deformation mode control being stabilized). By the provision of the reinforcing-plate-side bead 96 extending along the length of the upper frame 17 with the rear end 96b located higher than the front end 96a, a frontal collision load can be transmitted upward, so that undesired bending of the arch-shaped section 92 can be prevented.

The stiffener 105 provided on the side surface 103 of the cowl box 34 located behind the upper frame 17, as shown in Fig. 8, can prevent sectional collapsing of the cowl box 34. If such sectional collapsing of the cowl box 34 occurs, a frontal collision load may undesirably deform the cabin or passenger compartment 12 without being appropriately transmitted from the upper frame 17 to the front pillar 19 (i.e., without the deformation mode control being stabilized). Therefore, in the instant embodiment, the stiffener 105 is provided on the side surface 103 of the cowl box 34 in order to prevent sectional collapsing of the cowl box 34 following the deformation of the upper frame 17 and damper section 33. In this way, the instant embodiment can reliably prevent deformation of the passenger compartment by allowing the collision load to be reliably transmitted to the front pillar 19 while maintaining the sectional shape of the cowl box 34.

Furthermore, the stiffener-side bead 106 is formed on the stiffener 105 to extend, in the front-rear direction of the vehicle body, closely to and generally in series with the reinforcing-plate-side bead 96. This arrangement can increase an amount of load transmission from the reinforcing plate 91 to the stiffener 105 and minimize an amount of load transmission to the arch-shaped section 92.

Furthermore, the vertical bead 76 is formed on a substantially middle region, in the vehicle width direction, of the damper section 33 and located in generally the same position, in the front-rear direction, as the bent portion 94, as shown in (a) and (b) of Fig. 9. This arrangement permits bending deformation of the damper section 33 with an even further enhanced reliability; namely, it can even further expand the impact absorbing area and impact absorbing amount.

Furthermore, the front side frame 16 includes the easily-deformable portion 75 located in generally the same position, in the front-rear direction, as the bent portion 94 and vertical bead 76. This arrangement too permits bending deformation of the damper section 33 with an even further enhanced reliability, and can even further expand the impact absorbing area and impact absorbing amount.

Furthermore, with the bent portion 94 bent in the vehicle width direction and provided in the side connection section 93 between the damper section 33 and the upper frame 17, the instant embodiment can not only provide the expanded impact absorbing area D1, but also provide an increased impact absorbing amount because the damper base 55 formed of a thick plate can be used as an impact absorbing member.

Further, by changing as necessary the strength of the reinforcing plate 91 that is fixed to the connection region of the upper frame 17 for reinforcing the connection region connected with the damper section 33, the instant embodiment of the front vehicle body structure can perform deformation mode control such that the upper frame 17 deforms prior to the bending deformation of the damper section 33, and thus, it can minimize a left-uncollapsed region of the upper frame 17 and thereby achieve an enhanced impact absorbing efficiency.

Further, with the bent portion 95 formed on the reinforcing plate 91 at a position corresponding to the bent portion 94 of the damper base 55 as shown in

Figs. 1 and 7, the instant embodiment permits more reliable bending deformation of the damper section 33 while controlling the deformation mode in such a manner that the upper frame 17 can deform prior to the bending deformation of the damper section 33. Thus, the instant embodiment can achieve both of an enhanced impact absorbing efficiency and stabilized deformation mode control.

Further, because the upper frame 17 is curved downwardly toward the rear of the vehicle and has the arch-shaped section 92 extending along the shape of the wheel arch 35 and because the reinforcing plate 91 includes the reinforcing-plate-side bead 96 located in front of the arch-shaped section 92 and extending along the length of the upper frame 17, in spaced-apart relation to the arch-shaped section 92, with the rear end 96b located higher than the front end 96a, as shown in Figs. 6 and 7, the instant embodiment can prevent a frontal collision load from concentrating on the arch-shaped section 92, provided at a rear end portion of the upper frame 17, to undesirably bend the arch-shaped section 92 and prevent the frontal collision load from deforming the cabin or passenger compartment 12 without being appropriately transmitted to the front pillar 19 (i.e., without the deformation mode control being stabilized). Namely, the instant embodiment can transmit the frontal collision load upward away from the arch-shaped section 92 and thereby prevent undesired bending of the rear end portion of the upper frame 17.

Further, in the instant embodiment, the cowl box 34 is provided between the front pillar 19 and the upper frame 17 and has the space section 104 of a generally C cross-sectional shape opening toward the front of the vehicle and extending in the vehicle width direction, and the stiffener 105 for preventing sectional collapsing of the cowl box 34 is provided on the side surface (side panel) 103 facing outwardly in the vehicle width direction, as shown in Fig. 8. By the stiffener 105 preventing sectional collapsing of the cowl box 34 following deformation of the damper section 33, the instant embodiment can reliably prevent deformation of the passenger compartment by allowing the collision load to be reliably transmitted to the front pillar 19 while maintaining the sectional shape of the cowl box 34 and thereby prevent deformation of the cabin or passenger compartment.

Furthermore, with the stiffener-side bead 106 formed on the stiffener 105 to extend, in the front-rear direction, closely to and generally in series with the reinforcing-plate-side bead 96 as shown in Fig. 8, the instant embodiment can increase an amount of load transmission from the reinforcing plate 91 to the stiffener 105 and minimize an amount of load transmission to the arch-shaped section 92.

Furthermore, with the vertical bead 76 formed on a substantially middle region, in the vehicle width direction, of the bent portion 94, convexly projecting inwardly in the vehicle width direction and extending in the up-down direction of the vehicle as shown in (a) and (b) of Fig. 9, the instant embodiment permits more reliable bending deformation of the damper section 33 and can achieve an increased impact absorbing area and increased impact absorbing amount.

Furthermore, with the easily-deformable portion 75 located in generally the same position in the front-rear direction as the vertical bead 76 as shown in (a) and (b) of Fig. 9, the instant embodiment permits bending deformation of the damper section 33 with an even further enhanced reliability, and can even further expand the impact absorbing area and impact absorbing amount.

Furthermore, the vertical bead 76, formed on the damper housing 56 of the damper section 33 and having a convex cross-sectional shape projecting in the vehicle width direction, can function as vertical beams against upward and downward input loads to the damper unit (not shown) and can increase the damper supporting rigidity. Further, the easily-deformable portion 75 and vertical bead 76 can function as bending start points in response to rearward and forward input frontal collision loads, and thus, for example, the damper base 55 formed of a thick plate can be used for impact absorption, so that the instant embodiment can increase the impact absorbing amount. Furthermore, with the vertical bead 76 formed in generally the same position, in the front-rear direction of the vehicle body, as the easily-deformable portion 75 that functions as a bending start point of the damper housing 56 and front side frame 16, it can be regarded that the bending start points provided by the front side frame 16 and damper section 33 are located in generally the same position in the front-rear direction. As a result, the instant embodiment can achieve stabilized bending mode control of the front side frame 16 without providing any other particular weakened portion in the front side frame 16 and hence without degrading the impact absorbing performance of the front side frame 16.

Furthermore, the lower end of the front ridge line 76a of the vertical bead 76 connects to a neighborhood of the rear end portions 73b of the horizontal beads 73, while the lower end of the rear ridge line 76b of the vertical bead 76 connects to the connection section 71 between the front side frame 16 and the dashboard 14. Thus, the instant embodiment can stabilize the deformation mode of the front side frame 16 by means of the front ridge line 76a, and increase the damper supporting rigidity by means of the rear ridge line 76b.

Furthermore, the reinforcing bracket 72, which is provided on the connection section 71 between the front side frame 16 and the dashboard 14, can increase rigidity and strength of the connection section 71 to which the rear ridge line 76b of the vertical bead 76 connects. Thus, the instant embodiment can even further increase the damper supporting rigidity.

Furthermore, the front ridge line 76a extending toward the easily-deformable portion 75 can function as a bending start point of the damper section 33, so that deformation mode of the front side frame 16 can be stabilized. The ridge line 76b extending toward the connection section 71 can increase the damper supporting rigidity.

The basic principles of the present invention are well suited for application to automotive vehicles employing a front vehicle body structure which includes left and right front pillars disposed behind left and right front side frames, left and right damper sections (damper housings) connected at their lower end portions to the corresponding front side frames and connected at their upper end portions to corresponding upper frames, and a dashboard separating an engine room and a cabin or passenger compartment and having the left and right front side frames connected thereto.

A front side frame (16) includes an easily-deformable portion (75) formed within a range of the front side frame which a damper section (33) is placed on and connected to, and the easily-deformable portion (75) has a lower yield strength against rearward and forward input loads than remaining regions of the front side frame. The damper section (33) has a vertical bead (76) having a cross-sectional shape projecting in a vehicle width direction and extending vertically. The easily-deformable portion (75) and the vertical bead (76) are disposed in generally the same position in a front-rear direction of the vehicle body.

## Claims

1. A front vehicle body structure comprising a front side frame (16) extending in a front-rear direction of a vehicle body (10), and a damper section (33), which includes a damper base (55) having a damper unit mounted thereon, and a damper housing (56) provided around the damper base (55), having a lower end portion (33b) placed on and connected to the front side frame (16),
wherein the front side frame (16) includes an easily-deformable portion (75) formed within a range (S2) of the front side frame over which the damper housing (56) is placed on and connected to, the easily-deformable portion (75) having a lower yield strength against rearward and forward input loads than the remaining regions of the front side frame (16),
wherein the damper section (33) has a vertical bead (76) provided on the damper housing (56) and having a cross-sectional shape projecting in a vehicle width direction and extending in an up-down direction of the vehicle body, and
the easily-deformable portion (75) and the vertical bead (76) are disposed in a generally same position in the front-rear direction of the vehicle body and function as bending start points in response to rearward and forward input frontal collision loads.

2. The front vehicle body structure according to claim 1, wherein the front side frame (16) has a horizontal bead (73) extending along a longitudinal direction of the front side frame (16), and the easily-deformable portion (75) is provided forwardly of a front end portion (73a) of the horizontal bead (73) or rearwardly of a rear end portion (73b) of the horizontal bead.

3. The front vehicle body structure according to claim 1 or 2, wherein the vertical bead (76) has front and rear ridge lines (76a, 76b), and a width between the front and rear ridge lines (76a, 76b) gradually increases toward the lower end portion of the damper section (33) connected to the front side frame (16).

4. The front vehicle body structure according to claim 3, which further comprises a dashboard (14) connected at a front end thereof to the front side frame (16) and separating an engine room (13) and a cabin (12), and
wherein the front ridge line (76a) of the vertical bead (76) extends vertically toward the easily-deformable portion (75) while the rear ridge line (76b) extends vertically toward a connection section (71) between the front side frame (16) and the dashboard (14).

5. The front vehicle body structure according to claim 4, wherein the connection section (71) between the front side frame (16) and the dashboard (14) includes a reinforcing bracket (72) for reinforcing the connection section (71).

6. The front vehicle body structure according to any one of claims 1 to 5, which further comprises a front pillar (19) disposed behind the front side frame (16), and an upper frame (17) disposed outwardly, in the vehicle width direction, of the front side frame and extending forwardly from the front pillar (19) above the front side frame, and
wherein a bent portion (94) bent in the vehicle width direction is provided in a connection section (93) between the damper section (33) and the upper frame (17),

7. The front vehicle body structure according to claim 6, wherein the upper frame (17) includes a reinforcing plate (91) for reinforcing a connection region (S3) of the upper frame (17) to which the damper section (33) is connected.

8. The front vehicle body structure according to claim 7, wherein the reinforcing plate (91) includes a reinforcing-plate-side bent portion (95) provided at a position thereof corresponding to the bent portion (94) provided in the connection section (93) between the damper section and the upper frame.

9. The front vehicle body structure according to any one of claims 6 to 8, wherein the upper frame (17) includes an arch-shaped section (92) curved downwardly toward a rear end of the upper frame and extending along a shape of a wheel arch (35), and
the reinforcing plate (91) is disposed in front of the arch-shaped section (92) and has a reinforcing-plate-side bead (96) extending along a longitudinal direction of the upper frame, the reinforcing-plate-side bead (96) extending obliquely, in spaced-apart relation to the arch-shaped section, with a rear end (96b) thereof located higher than a front end (96a) thereof.

10. The front vehicle body structure according to any one of claims 6 to 9, which further comprises a cowl box (34) of a generally C cross-sectional shape disposed between the front pillar (19) and the upper frame (17) and extending in the vehicle width direction, and
wherein the cowl box (34) has a side surface (103) facing outwardly in the vehicle width direction, and a stiffener (105) is provided on the side surface for preventing collapsing of a closed section of the cowl box.

11. The front vehicle body structure according to claim 10, wherein the stiffener (105) has a stiffener-side bead (106) extending, in the front-rear direction of the vehicle body, closely to and generally in series with the reinforcing-plate-side bead (106).

## Patentansprüche

1. Fahrzeugkörper-Frontstruktur, umfassend einen vorderseitigen Rahmen (16), welcher sich in einer Vorne-Hinten-Richtung von einem Fahrzeugkörper (10) erstreckt, und einen Dämpferabschnitt (33), welcher eine Dämpferbasis (55) umfasst, welche eine daran montierte Dämpfereinheit hat, und ein Dämpfergehäuse (56) umfasst, welches um die Dämpferbasis (55) herum vorgesehen ist, mit einem unteren Endabschnitt (33b), welcher an dem vorderseitigen Rahmen (16) angeordnet und mit diesem verbunden ist,
wobei der vorderseitige Rahmen (16) einen leicht verformbaren Abschnitt (75) umfasst, welcher innerhalb eines Bereichs (S2) von dem vorderseitigen Rahmen ausgebildet ist, über welchen das Dämpfergehäuse (56) angeordnet und verbunden ist, wobei der leicht verformbare Abschnitt (75) eine niedrigere Streckgrenze gegenüber nach hinten und nach vorne zugeführten Lasten als die übrigen Bereiche von dem vorderseitigen Rahmen (16) hat, wobei der Dämpferabschnitt (33) eine vertikale Sicke (76) hat, welche an dem Dämpfergehäuse (56) vorgesehen ist und eine Querschnittsform hat, welche in einer Fahrzeugbreitenrichtung vorsteht und sich in einer Auf-Ab-Richtung von dem Fahrzeugkörper erstreckt, und
der leicht verformbare Abschnitt (75) und die vertikale Sicke (76) an einer im allgemeinen gleichen Position in der Vorne-Hinten-Richtung von dem Fahrzeugkörper angeordnet sind und als Biegungsstartpunkte fungieren in Reaktion auf nach hinten und nach vorne zugeführte Frontalkollisionslasten.

2. Fahrzeugkörper-Frontstruktur nach Anspruch 1, wobei der vorderseitige Rahmen (16) eine horizontale Sicke (73) hat, welche sich entlang einer Längsrichtung von dem vorderseitigen Rahmen (16) erstreckt, und der leicht verformbare Abschnitt (75) vorwärts von einem vorderen Endabschnitt (73a) von der horizontalen Sicke (73) oder rückwärts von einem hinteren Endabschnitt (73b) von der horizontalen Sicke vorgesehen ist.

3. Fahrzeugkörper-Frontstruktur nach Anspruch 1 oder 2, wobei die vertikale Sicke (76) vordere und hintere Kammlinien (76a, 76b) hat, und eine Breite zwischen den vorderen und hinteren Kammlinien (76a, 76b) allmählich zu dem unteren Endabschnitt von dem Dämpferabschnitt (33) hin zunimmt, welcher mit dem vorderseitigen Rahmen (16) verbunden ist.

4. Fahrzeugkörper-Frontstruktur nach Anspruch 3, welche ferner ein Armaturenbrett (14) umfasst, welches an einem vorderen Ende davon mit dem vorderseitigen Rahmen (16) verbunden ist und einen Motorraum (13) und einen Fahrgastraum (12) trennt, und
wobei die vordere Kammlinie (76a) von der vertikalen Sicke (76) sich vertikal zu dem leicht verformbaren Abschnitt (75) hin erstreckt, während die hintere Kammlinie (76b) sich vertikal zu einem Verbindungsabschnitt (71) zwischen dem vorderseitigen Rahmen (16) und dem Armaturenbrett (14) hin erstreckt.

5. Fahrzeugkörper-Frontstruktur nach Anspruch 4, wobei der Verbindungsabschnitt (71) zwischen dem vorderseitigen Rahmen (16) und dem Armaturenbrett (14) eine Verstärkungshalterung (72) zum Verstärken des Verbindungsabschnitts (71) umfasst.

6. Fahrzeugkörper-Frontstruktur nach einem der Ansprüche 1 bis 5, ferner umfassend eine vordere Säule (19), welche hinter dem vorderseitigen Rahmen (16) angeordnet ist, und einen oberen Rahmen (17), welcher in der Fahrzeugbreitenrichtung auswärts von dem vorderseitigen Rahmen angeordnet ist, und sich von der vorderen Säule (19) oberhalb des vorderseitigen Rahmens nach vorne erstreckt, und
wobei ein gebogener Abschnitt (94), welcher in der Fahrzeugbreitenrichtung gebogen ist, in einem Verbindungsabschnitt (93) zwischen dem Dämpferabschnitt (33) und dem oberen Rahmen (17) vorgesehen ist.

7. Fahrzeugkörper-Frontstruktur nach Anspruch 6, wobei der obere Rahmen (17) eine Verstärkungsplatte (91) umfasst, um einen Verbindungsbereich (S3) von dem oberen Rahmen (17) zu verstärken, mit welchem der Dämpferabschnitt (33) verbunden ist.

8. Fahrzeugkörper-Frontstruktur nach Anspruch 7, wobei die Verstärkungsplatte (91) einen Verstärkungsplatte-seitigen gebogenen Abschnitt (95) umfasst, welcher an einer Position davon vorgesehen ist, welche dem gebogenen Abschnitt (94) entspricht, welcher in dem Verbindungsabschnitt (93) zwischen dem Dämpferabschnitt und dem oberen Rahmen vorgesehen ist.

9. Fahrzeugkörper-Frontstruktur nach einem der Ansprüche 6 bis 8, wobei der obere Rahmen (17) einen bogenförmigen Abschnitt (92) umfasst, welcher zu einem hinteren Ende von dem oberen Rahmen hin nach unten gekrümmt ist und sich entlang einer Form von einem Radlauf (35) erstreckt, und
die Verstärkungsplatte (91) vor dem bogenförmigen Abschnitt (92) angeordnet ist und eine Verstärkungsplatte-seitige Sicke (96) hat, welche sich entlang einer Längsrichtung von dem oberen Rahmen erstreckt, wobei die Verstärkungsplatte-seitige Sicke (96) sich schräg erstreckt, in einer beabstandeten Beziehung zu dem bogenförmigen Abschnitt, wobei ein hinteres Ende (96b) davon höher als ein vorderes Ende (96a) davon angeordnet ist.

10. Fahrzeugkörper-Frontstruktur nach einem der Ansprüche 6 bis 9, ferner umfassend einen Verkleidungskasten (34) mit einer im allgemeinen C-förmigen Querschnittsform, welcher zwischen der vorderen Säule (19) und dem oberen Rahmen (17) angeordnet ist, und sich in der Fahrzeugbreitenrichtung erstreckt, und
wobei der Verkleidungskasten (34) eine Seitenfläche (103) hat, welche in der Fahrzeugbreitenrichtung nach Außen weist, und eine Versteifung (105) an der Seitenfläche vorgesehen ist, um ein Zusammenfallen von einem geschlossenen Abschnitt von dem Verkleidungskasten zu verhindern.

11. Fahrzeugkörper-Frontstruktur nach Anspruch 10, wobei die Versteifung (105) eine Versteifung-seitige Sicke (106) hat, welche sich in der Vorne-Hinten-Richtung von dem Fahrzeugkörper nahezu und im Allgemeinen in Reihe mit der Verstärkungsplatte-seitigen Sicke (106) erstreckt.

## Revendications

1. Structure de châssis avant de carrosserie de véhicule comprenant un cadre avant (16) s'étendant dans une direction avant-arrière d'une carrosserie de véhicule (10) et une section amortisseur (33), qui comprend une base d'amortisseur (55) ayant un amortisseur monté sur celle-ci, et un boîtier d'amortisseur (56) prévu autour de la base d'amortisseur (55), ayant une partie d'extrémité inférieure (33b) placée sur le cadre avant (16) et connectée à celui-ci,
dans lequel le cadre avant (16) comprend une partie facilement déformable (75) formée dans une plage (S2) du cadre avant sur laquelle le boîtier d'amortisseur (56) est placé et à laquelle il est connecté, la partie facilement déformable (75) ayant une limite élastique inférieure vis-à-vis des charges d'entrée vers l'arrière et vers l'avant que les régions restantes du cadre avant (16),
dans laquelle la section d'amortisseur (33) a un talon vertical (76) prévu sur le boîtier d'amortisseur (56) et ayant une forme de section transversale se projetant dans une direction de la largeur du véhicule et s'étendant dans une direction haut-bas de la carrosserie du véhicule, et
la partie facilement déformable (75) et le talon vertical (76) sont disposés dans une position généralement identique dans la direction avant-arrière de la carrosserie du véhicule et fonctionnent comme points de départ flexibles en réponse à des charges de collision vers l'arrière et vers l'avant.

2. Structure de châssis avant de carrosserie de véhicule suivant la revendication 1, dans laquelle le cadre avant (16) a un talon horizontal (73) s'étendant le long d'une direction longitudinale du cadre avant (16), et la partie facilement déformable (75) est prévue en avant d'une partie avant (73a) du talon horizontal (73) ou vers l'arrière d'une partie arrière (73b) du talon horizontal.

3. Structure de châssis avant de carrosserie de véhicule suivant la revendication 1 ou 2, dans laquelle le talon vertical (76) a des lignes d'arête avant et arrières (76a, 76b) et une largeur entre les lignes d'arête avant et arrière (76a, 76b) augmente graduellement vers la partie d'extrémité inférieure de la section d'amortisseur (33) connectée au cadre avant (16).

4. Structure de châssis avant de carrosserie de véhicule suivant la revendication 3, qui comprend en outre un tableau de bord (14) connecté à une extrémité avant de celle-ci au cadre avant (16) et séparant un compartiment moteur (13) et un habitacle (12), et
dans laquelle la ligne d'arête avant (76a) du talon vertical (76) s'étend verticalement vers la partie facilement déformable (75) alors que la ligne d'arête arrière (76b) s'étend verticalement vers une section de connexion (71) entre le cadre avant (16) et le tableau de bord (14).

5. Structure de châssis avant de carrosserie de véhicule suivant la revendication 4, dans laquelle la section de connexion (71) entre le cadre avant (16) et le tableau de bord (14) comprend une console de renfort (72) pour renforcer la section de connexion (71).

6. Structure de châssis avant de carrosserie de véhicule suivant l'une des revendications 1 à 5, qui comprend en outre un montant avant (19) disposé derrière le cadre avant (16) et un cadre supérieur (17) disposé vers l'extérieur du cadre avant dans la direction de la largeur du véhicule et s'étendant vers l'avant depuis le montant avant (19) au-dessus du cadre avant, et
dans laquelle une partie pliée (94), pliée dans la direction de la largeur du véhicule est prévue dans une section de connexion (93) entre la section d'amortisseur (33) et le cadre supérieur (17).

7. Structure de châssis avant de carrosserie de véhicule suivant la revendication 6, dans laquelle le cadre supérieur (17) comprend une plaque de renforcement (91) pour renforcer une région de connexion (S3) du cadre supérieur (17) à laquelle la section d'amortisseur (33) est connectée.

8. Structure de châssis avant de carrosserie de véhicule suivant la revendication 7, dans laquelle la plaque de renforcement (91) comprend une partie pliée du côté de la plaque de renforcement (95) prévue à une position de celle-ci correspondant à la partie pliée (94) prévue dans la section de connexion (93) entre la section d'amortisseur et le cadre supérieur.

9. Structure de châssis avant de carrosserie de véhicule suivant l'une des revendications 6 à 8, dans laquelle le cadre supérieur (17) comprend une section en forme d'arc (92) incurvée vers le bas vers une extrémité arrière du cadre supérieur et s'étendant le long d'une forme de passage de roue (35), et
la plaque de renforcement (91) est disposée à l'avant de la section en forme d'arc (92) et a un talon du côté de la plaque de renforcement (96) s'étendant le long d'une direction longitudinale du cadre supérieur, le talon du côté de la plaque de renforcement (96) s'étendant en oblique, en relation écartée de la section en forme d'arc, avec une extrémité arrière (96b) de celui-ci située plus haut qu'une extrémité avant (96a) de celui-ci.

10. Structure de châssis avant de carrosserie de véhicule suivant l'une des revendications 6 à 9, qui comprend en outre un boîtier de capot (34) de section transversale généralement en forme de C disposé entre le montant avant (19) et le cadre supérieur (17) et s'étendant dans la direction de la largeur du véhicule, et
dans laquelle le boîtier de capot (34) a une surface latérale (103) faisant face vers l'extérieur dans la direction de la largeur du véhicule et un raidisseur (105) est prévu sur la surface latérale afin d'empêcher l'effondrement d'une section fermée du boîtier de capot.

11. Structure de châssis avant de carrosserie de véhicule suivant la revendication 10, dans laquelle le raidisseur (105) a un talon du côté raidisseur (106) s'étendant dans la direction avant-arrière de la carrosserie du véhicule, près de et généralement en série avec le talon du côté de la plaque de renforcement (106).
